(19)

Europäisches
Patentamt
European
Patent Office
Office européen
des brevets

(11) **EP 2 169 483 A1**

(12) **EUROPEAN PATENT APPLICATION**

(43) Date of publication:
**31.03.2010 Bulletin 2010/13**

(51) Int Cl.:
**G05B 13/04** $^{(2006.01)}$

(21) Application number: **08164844.6**

(22) Date of filing: **23.09.2008**

| | |
|---|---|
| (84) Designated Contracting States:<br>**AT BE BG CH CY CZ DE DK EE ES FI FR GB GR<br>HR HU IE IS IT LI LT LU LV MC MT NL NO PL PT<br>RO SE SI SK TR**<br>Designated Extension States:<br>**AL BA MK RS** | • **Gallestey Alvarez, Eduardo<br>5522 Tägerig (CH)**<br>• **Poland, Jan<br>5400 Baden (CH)** |
| (71) Applicant: **ABB Research Ltd<br>8050 Zürich (CH)** | (74) Representative: **ABB Patent Attorneys<br>C/o ABB Schweiz AG<br>Intellectual Property (CH-LC/IP)<br>Brown Boveri Strasse 6<br>5400 Baden (CH)** |
| (72) Inventors:<br>• **Stadler, Konrad<br>8166 Niederweningen (CH)** | |

(54) **Method and system for controlling an industrial process**

(57)      A control system (4) for controlling an industrial process (42), comprises an indicator generator (43) configured to determine at least one fuzzy logic based indicator (z) from the measured process variables (y). The control system (4) further comprises a state estimator (44) configured to determine estimated physical process states ($\hat{x}$) based on the fuzzy indicator (z). For controlling the industrial process (42), the process controller (41) is configured to calculate manipulated variables (u) based on defined set-points (r) and based on a physical model of the process (42) using the estimated physical process states ($\hat{x}$). Combining a fuzzy logic indicator (z) with a model based process controller (41) makes it possible to provide robust indicators of the process states ($\hat{x}$) for controlling an industrial process (42) in a real plant situation measured process variables (y) possibly contradict each other.

Fig. 4

**Description**

FIELD OF THE INVENTION

The present invention relates to a system and a control method for controlling an industrial process. Specifically, the invention relates to a system and a control method for controlling an industrial process, such as operating a rotary kiln in a cement production process, by calculating manipulated variables based on defined set-points and a fuzzy logic indicator determined from measured process variables.

BACKGROUND OF THE INVENTION

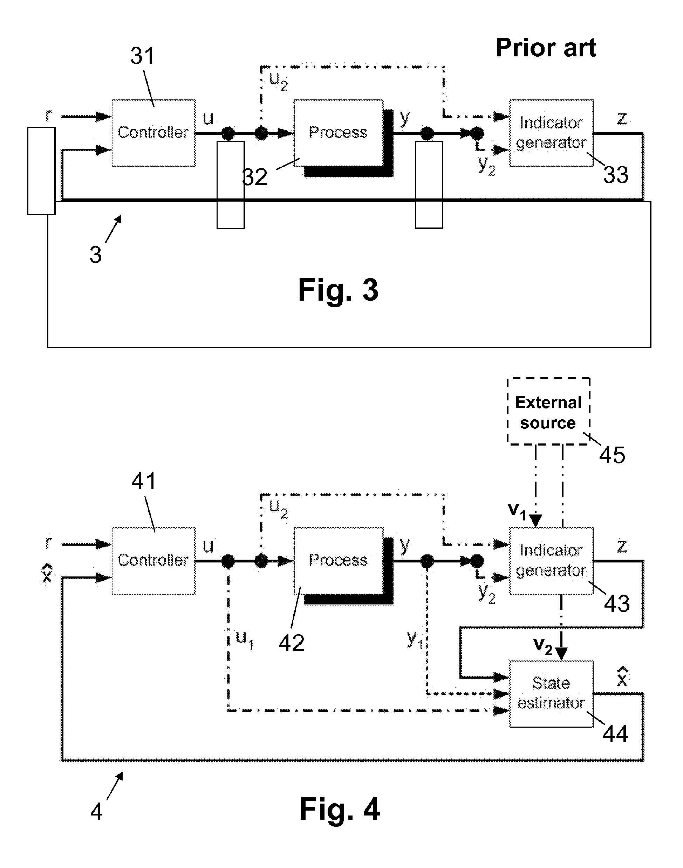

In advanced process control for industrial processes many different system configurations in respect to the control algorithm are known. However, as illustrated in Fig. 3, according to user specifications (set-points r), all systems generate set-points for a set of actuators (manipulated variables, u) taking into account measurements taken from a set of sensors (process variables, y). Typically, not all desired process variables y can be measured and therefore indicator generators 33 are used to determine process indicators z in approximation of these missing measurements. As illustrated schematically in Fig. 3, the indicators z are determined based on one or more of the process variables $y_2$ and/or manipulated variables $u_2$.

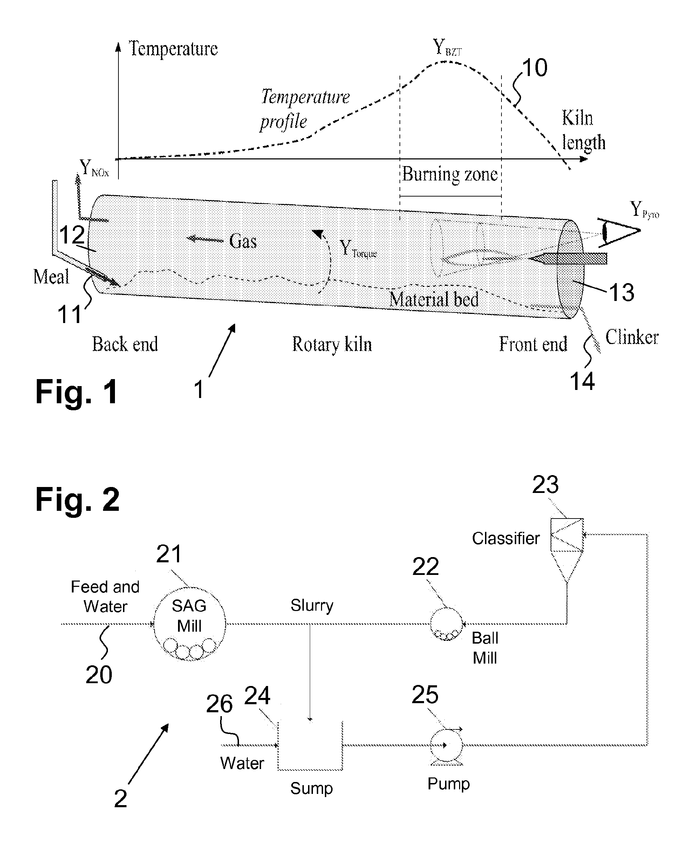

For example, in the cement production process, the raw components and the raw mixture are transported from the feeders to a kiln, possibly involving additional crushers, feeders that provide additional additives to the raw mixture, transport belts, storage facilities and the like. As illustrated in Fig. 1, the kiln 1 is arranged with a slope and mounted such that it can be rotated about its central longitudinal axis. The raw mixture (meal) 11 is introduced at the top (feed or back end) 12 of the kiln 1 and transported under the force of gravity down the length of the kiln 1 to an exit opening (discharge or front end) 13 at the bottom. The kiln 1 operates at temperatures in the order of 1,000 degrees Celsius. As the raw mixture passes through the kiln, the raw mixture is calcined (reduced, in chemical terms). Water and carbon dioxide are driven off, chemical reactions take place between the components of the raw mixture, and the components of the raw mixture fuse to form what is known as clinker 14. In the course of these reactions new compounds are formed. The fusion temperature depends on the chemical composition of the feed materials and the type and amount of fluxes that are present in the mixture. The principal fluxes are alumina (A1203) and iron oxide (Fe2O3), which enable the chemical reactions to occur at relatively lower temperatures.

The environmental conditions of the clinker production (up to 2500˚C, dusty, rotating) do not make possible direct measurement of the temperature profile 10 along the length of a rotary kiln 1. Typically, burning zone temperature $Y_{BZT}$ is used as the indicator in current systems and by the operators of a rotary cement kiln 1. The sintering condition or burning zone temperature $Y_{BZT}$ is usually related to one or a combination of several of the following measurements:

-    The torque (or power) required to rotate the kiln 1 ($Y_{Torque}$);
-    $NO_x$ measurements in the exhaust gas ($Y_{NOx}$); and
-    Temperature readings based on a pyrometer located at the exit opening (discharge or front end) 13 of the kiln 1 ($Y_{Pyro}$).

As the hot meal becomes stickier at higher temperatures, the torque needed to rotate increases because more and more material is dragged up the side of the kiln. The temperature of the gas can be related to the $NO_x$ levels in the exhaust gas. All three measurements are unreliable, however. For example, the varying dust condition will significantly influence the pyrometer readings, as the pyrometer is directed very often at "shadows" producing false readings. Nevertheless, the aggregation of the three measurements, as defined in equation (1), usually provides a reasonably reliable determination of the burning zone temperature $Y_{BZT}$.

$$Y_{BZT} = f(Y_{Torque}, Y_{NOx}, Y_{Pyro}) \qquad (1)$$

Where f is a description on how $Y_{BZT}$ relates to the sensor measurements. Typically, the function f is described by a fuzzy logic system (often called expert system) performed by an indicator generator. This indicator is thus a fuzzy logic based indicator, for example an integer value on the scale [-3, +3] corresponding to an indication of [cold...hot], i.e. a fuzzy indicator of the aggregated burning zone temperature, but not an actual physical temperature value (in ˚C or ˚F).

Although, the aggregation of the three measurements provides the burning zone temperature as a reasonably reliable indicator of the burning zone temperature, it does not provide the temperature profile along the whole length of the rotary kiln. However, knowledge of the temperature profile would make possible better predictions of the process, leading to an improved process control.

In another example, a wet grinding process may require grinding circuits with different configurations depending on the ore characteristics, the design plant capacity, etc. As illustrated in Fig. 2, the grinding circuit 2 will typically comprise several mills (rod, ball, SAG, AG) 21, 22 in series and/or parallel with a number of classifiers (hydrocyclones) 23 and sumps 24 at appropriate locations. Typically, the arrangement is one where one of the streams leaving the classifier 23 is conduced back through a pump 25 either to a sump 24 or to another mill 21, 22 for further processing, while the other is eliminated from the circuit 2. One classifier will have the task of selecting the final product. Water 26 is normally added at the sumps 24, with fresh feed 20 entering the system. Grinding media is introduced in the system continuously based on estimations of their load in the mills 21, 22. The goal of the grinding section is to reduce the ore particle size to levels adequate for processing in the flotation stage. Measurable process variables may include mill sound level, mill bearing pressure, mill power draw, slurry density, and flows and pressures at critical places. Controllable variables to be manipulated include fresh feed rate, process water flow (pump rate), and rotational speed of the mill(s). The process targets include particle size specification, circulating load target, and bearing pressure limits. Thus, based on the measurable process variables and/or controllable variables, one or more indicators need to be determined for controlling the grinding process. It is crucial to be able to have a constant product rate within the quality specifications. It is also crucial to be able to execute this process step with lowest possible energy and grinding media consumption.

DESCRIPTION OF THE INVENTION

It is therefore an objective of the present invention to provide a control system and a control method suitable for controlling an industrial process in a real plant situation where the available signals representing measurements of process variables possibly contradict each other, rendering them useless in a conventional model based control system. Particularly, it is an objective of the present invention to provide a control system and a control method which provide robust (reliable) indicators of the state of a cement rotary kiln that can be used to generate a temperature profile of the rotary kiln. Furthermore, it is a particular objective of the present invention to provide a control system and a control method which provide a robust indicator of a mill state of a grinding system.

At least some of these objectives are achieved by a control method for controlling an industrial process according to claim 1, and a control system for controlling an industrial process according to claim 7. Further preferred embodiments are evident from the dependent claims.

For controlling an industrial process, a plurality of process variables are measured, at least one fuzzy logic based indicator (short: fuzzy logic indicator) is determined from the measured process variables, and, for controlling the process, manipulated variables are calculated based on defined set-points and the fuzzy logic indicator. For example, the fuzzy logic indicator is determined using a neural network or a statistical learning method.

According to the present invention, the above-mentioned objects are particularly achieved in that, estimated process states are determined based on the fuzzy logic indicator, and the manipulated variables are calculated by a controller based on a model of the process using the estimated process states. Specifically, determined are estimated *physical* process states based on the fuzzy logic indicator, and the manipulated variables are calculated by a controller based on a *physical* model of the process using the estimated *physical* process states. For example, the controller is a Model Predictive Controller (MPC). For example, the estimated process states are determined by one of a Kalman filter, a state observer, and a moving horizon estimation method.

For example, the industrial process relates to operating a rotary kiln, e.g. for a cement production process. Correspondingly, measuring the process variables includes measuring the torque required for rotating the kiln, measuring the $NO_x$ level in exhaust gas, and taking pyrometer readings at an exit opening of the kiln. A burning zone temperature is determined as a fuzzy logic indicator based on the torque, the $NO_x$ level, and the pyrometer readings. A temperature profile along a longitudinal axis of the kiln is determined as the estimated process state based on the burning zone temperature, and the manipulated variables are calculated based on the temperature profile.

In an embodiment, the fuzzy logic indicator is based on the measured process variables and on one or more of the manipulated variables.

In a further embodiment, the estimated process states are determined based on the fuzzy logic indicator, one or more of the process variables, and/or one or more of the manipulated variables.

BRIEF DESCRIPTION OF THE DRAWINGS

The present invention will be explained in more detail, by way of example, with reference to the drawings in which:

Fig. 1 shows a schematic illustration of a conventional rotary kiln and a graph of a temperature profile along the kiln,
Fig. 2 shows a block diagram illustrating a conventional grinding circuit for executing a wet grinding process,
Fig. 3 shows a block diagram illustrating a conventional control system for controlling an industrial process, the system comprising an indicator generator linked to the process controller.

Fig. 4 shows a block diagram illustrating an example of a control system according to the invention for controlling an industrial process, the system comprising a state estimator which links the indicator generator to a model based process controller.

## DETAILED DESCRIPTION OF PREFERRED EMBODIMENTS

Fig. 3 shows a conventional control system 3 comprising a process controller 31 for controlling an industrial process 32 based on user defined set-points r.

The control system 3 further comprises an indicator generator 33 comprising a fuzzy logic or expert system. The indicator generator 33 is configured to generate a fuzzy logic indicator z based on a set $y_2$ of measured process variables y, and/or based on a set $u_2$ of the manipulated variables u, generated by the process controller 31 for controlling the industrial process 32. The fuzzy logic indicator z is fed back to the process controller 31, which is accordingly configured as a fuzzy logic or expert system based controller to derive the set-points of the manipulated variables u based on the fuzzy logic indicator z.

For example, in a cement production process, specifically in operating a rotary kiln 1 in a cement production process, the fuzzy indicator z indicates the aggregated burning zone temperature $Y_{BZT}$ of the rotary kiln 1 and is determined based on a set $y_2$ of measured process variables y including torque ($Y_{Torque}$) required to rotate the kiln 1, $NO_x$ measurements in the exhaust gas ($Y_{Nox}$), and temperature readings based on a pyrometer located at the exit opening (discharge or front end) of the kiln ($Y_{Pyro}$), as described earlier with reference to Fig. 1.

In another example, in a wet grinding process, the fuzzy indicator z indicates a mill state of a grinding system and is determined based on a set $y_2$ of measured process variables y including mill sound level, mill bearing pressure, mill power draw, slurry density, and flows and pressures at specific places, as described earlier with reference to Fig. 2.

In Fig. 4, reference numeral 4 refers to a control system according to the invention for controlling an industrial process 42 such as a cement production process or a wet grinding process. The industrial process 42 is controlled based on set-points of manipulated variables u, generated by process controller 41 based on the user defined set-points r.

The control system 4 further includes an indicator generator 43 for determining one or more fuzzy logic indicator (s) z based on a set $y_2$ of measured process variables y, and/or based on a set $u_2$ of the manipulated variables u, as described above in the context of Fig. 3. In an embodiment, the indicator generator 43 is based on a neural net system or a statistical learning method.

In control system 4, the process controller 41 is implemented as a model based controller. Generally, in model based controllers (such as model predictive control, MPC) a mathematical model is used to predict the behavior of the system in the near future. This model can be a black-box or a physical model (i.e. grey-box) respectively. For control purposes the model states need to be provided before the controller generates the manipulated variables u. Specifically, MPC is a procedure of solving an optimal-control problem, which includes system dynamics and constraints on the system output and/or state variables. A system or process model valid at least around a certain operating point allows expressing a manipulated system trajectory or sequence of output signals y in terms of a present state of the system, forecasts of external variables and future control signals u. A performance, cost or objective function involving the trajectory or output signals y is optimized according to some pre-specified criterion and over some prediction horizon. An optimum first or next control signal $u_1$ resulting from the optimization is then applied to the system, and based on the subsequently observed state of the system and updated external variables, the optimization procedure is repeated. Depending on the embodiment, the model based controller 41 is based on any linear or nonlinear model based control algorithm, such as IMC (Internal Model Control), LQR (Linear Quadratic Regulator), LQG (Linear Quadratic Gaussian), Linear MPC (Model Predictive Control), NMPC (Nonlinear Model Predictive Control), or the like.

The control system 4 further comprises a state estimator 44 configured to determine the model states $\hat{x}$, e.g. as estimated physical process states, based on the fuzzy indicator z. As indicated schematically through dashed lines in Fig. 4, in different embodiments, the state estimator 44 is configured to determine the model states (estimated physical process states) $\hat{x}$ based also on a set $y_1$ of measured process variables y, and/or based on a set $u_1$ of the manipulated variables u. For example, the state estimator 44 is configured to derive the model states (estimated physical process states) $\hat{x}$ by estimation techniques such as Kalman filter, observer design or moving horizon estimation. EP 1406136 discloses an exemplary method of estimating model states or process properties. In a State Augmented Extended Kalman Filter (SAEKF) an augmented state p includes dynamic physical properties of the process which are representable by a function of the state vector x. In the example of the cement production process, the fuzzy logic indicator z provided by indicator generator 43 is the burning zone temperature $Y_{BZT}$ of the rotary kiln 1, and the state estimator 44 is configured to determine the temperature profile 10 along the longitudinal axis of the kiln 1 based on the burning zone temperature $Y_{BZT}$. For that purpose, the state estimator 44 includes preferably a suitable physical model of the kiln 1 which takes into account the mass flows and rotary speed of the kiln 1.

It should be noted that the sets $u_1$, $u_2$, $y_1$ and $y_2$, are either 0, a subset of the parent set ($u_i \subset u, y_i \subset y$), or the complete parent set, respectively.

As illustrated schematically in Fig. 4, in an embodiment, there is an external, independent source 45, neither an actuator nor a measurement, providing an external input $v_1$ and/or $v_2$ to the indicator generator 43 and/or the state estimator 44, respectively. Correspondingly, the fuzzy logic indicator z is further based by the indicator generator 43 on external input $v_1$, and/or the model states $\hat{x}$ are further based by the state estimator 44 on the external input $v_2$.

The process controller 41, indicator generator 43, and the state estimator 44 are logic modules implemented as programmed software modules for controlling a processor. One skilled in the art will understand, however, that these logic modules can also be implemented fully or partly by hardware elements.

## Claims

1.  A control method for controlling an industrial process (42), the method comprising:

    measuring a plurality of process variables (y);
    determining at least one fuzzy logic based indicator (z) from the measured process variables (y); and
    calculating, for controlling the process (42), manipulated variables (u) based on defined set-points (r) and the indicator (z);
    **characterized in that**
    the method further comprises determining estimated process states $(\hat{x})$ based on the indicator (z); and
    the manipulated variables (u) are calculated by a controller (41) based on a model of the process (42) using the estimated process states $(\hat{x})$.

2.  The method according to claim 1, wherein determining the estimated process states $(\hat{x})$ includes determining estimated physical process states based on the indicator (z); and the manipulated variables (u) are calculated by the controller (41) based on a physical model of the process (42) using the estimated physical process states $(\hat{x})$.

3.  The method according to one of claims 1 or 2, wherein the industrial process (42) relates to operating a rotary kiln (1); measuring the process variables (y) includes measuring the torque required for rotating the kiln (1), measuring the NOx level ($Y_{NOx}$) in exhaust gas, and taking pyrometer readings ($Y_{Pyro}$) at an exit opening (13) of the kiln (1); determining the indicator (z) includes determining a burning zone temperature ($Y_{BZT}$) based on the torque, the NOx level ($Y_{NOx}$), and the pyrometer readings ($Y_{Pyro}$); determining the estimated process states $(\hat{x})$ includes determining a temperature profile (10) along a longitudinal axis of the kiln (1) based on the burning zone temperature ($Y_{BZT}$); and the manipulated variables (u) are calculated based on the temperature profile (10).

4.  The method according to one of claims 1 to 3, wherein determining the indicator (z) is further based on one or more of the manipulated variables (u).

5.  The method according to one of claims 1 to 4, wherein determining the estimated process states $(\hat{x})$ is further based on one or more of the process variables (y) and/or one or more of the manipulated variables (u).

6.  The method according to one of claims 1 to 5, wherein the manipulated variables (u) are calculated by a Model Predictive Controller; the estimated process states $(\hat{x})$ are determined by one of a Kalman filter, a state observer, and a moving horizon estimation method; and the indicator (z) is determined using a neural network or a statistical learning method.

7.  A control system (4) for controlling an industrial process (42), the system (4) comprising:

    sensors for measuring a plurality of process variables (y);
    an indicator generator (43) configured to determine at least one fuzzy logic based indicator (z) from the measured process variables (y); and
    a process controller (41) configured to calculate manipulated variables (u) based on defined set-points (r) and the indicator (z);
    **characterized in that**
    the system (4) further comprises an estimator (44) configured to determine estimated process states $(\hat{x})$ based on the indicator (z); and
    the process controller (41) is configured to calculate the manipulated variables (u) based on a model of the process (42) using the estimated process states $(\hat{x})$.

8. The system (4) according to claim 7, wherein the estimator (44) is configured to determine estimated physical process states $(\hat{x})$ based on the indicator (z); and the process controller (41) is configured to calculate the manipulated variables (u) based on a physical model of the process (42) using the estimated physical process states $(\hat{x})$.

9. The system (4) according to one of claims 7 or 8, wherein the industrial process (42) relates to operating a rotary kiln (1); the sensors are configured to measure as process variables (y) the torque required for rotating the kiln (1), the NOx level $(Y_{NOx})$ in exhaust gas, and pyrometer readings $(Y_{Pyro})$ at an exit opening (13) of the kiln (1); the indicator generator (43) is configured to determine as indicator (z) a burning zone temperature $(Y_{BZT})$ based on the torque, the NOx level $(Y_{NOx})$, and the pyrometer readings $(Y_{Pyro})$; the estimator (44) is configured to determine as estimated process states $(\hat{x})$ a temperature profile (10) along a longitudinal axis of the kiln (1) based on the burning zone temperature $(Y_{BZT})$; and the process controller (41) is configured to calculate the manipulated variables (u) based on the temperature profile (10).

10. The system (4) according to one of claims 7 to 9, wherein the indicator generator (43) is connected to the process controller (41); and the indicator generator (43) is further configured to determine the indicator (z) based on one or more of the manipulated variables (u).

11. The system (4) according to one of claims 7 to 10, wherein the estimator (44) is connected to the process controller (41) and/or one or more of the sensors; and the estimator (44) is further configured to determine the estimated process states $(\hat{x})$ based on one or more of the process variables (y) and/or one or more of the manipulated variables (u), respectively.

12. The system (4) according to one of claims 7 to 11, wherein the process controller (41) is a Model Predictive Controller; the estimator (44) includes one of a Kalman filter, a state observer, and a moving horizon estimation method; and the indicator generator (43) includes a neural network or a statistical learning method.

Temperature

$Y_{BZT}$

*Temperature profile*

10

Kiln length

Burning zone

$Y_{NOx}$

$Y_{Pyro}$

12

Gas

$Y_{Torque}$

Meal

Material bed

13

11

Clinker

Back end

Rotary kiln

Front end

14

## Fig. 1

1

## Fig. 2

23

Classifier

21

22

Feed and Water

SAG Mill

Slurry

Ball Mill

26

24

25

20

Water

Sump

Pump

2

**Prior art**

31

r → Controller | u — Process | y — Indicator generator | z

u₂

32

y₂

33

3

# Fig. 3

External source

45

41

r →
x̂ →

Controller | u — Process | y — Indicator generator | z

u₂

v₁

42

u₁

y₁

y₂

43

v₂

State estimator | x̂

44

4

# Fig. 4

Europäisches
Patentamt
European
Patent Office
Office européen
des brevets

# EUROPEAN SEARCH REPORT

**Application Number**

EP 08 16 4844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/059441 A1 (MARTIN GREGORY D [US] ET AL MARTIN GREGORY D [US] ET AL) 25 March 2004 (2004-03-25) | 1,7 | INV. G05B13/04 |
| X | * paragraph [0002] * <br> * paragraph [0013] * <br> * paragraph [0052] * <br> * paragraph [0074] - paragraph [0076] * | 1,7 | |
| Y | ----- | 2-6,8-12 | |
| Y | AKALP M ET AL: "Supervisory fuzzy control of a rotary cement kiln" ELECTROTECHNICAL CONFERENCE, 1994. PROCEEDINGS., 7TH MEDITERRANEAN ANTALYA, TURKEY 12-14 APRIL 1994, NEW YORK, NY, USA,IEEE, 12 April 1994 (1994-04-12), pages 754-757, XP010130534 ISBN: 978-0-7803-1772-7 * page 754, column 1, line 36 - column 2, line 16 * | 2-5,8-11 | |
| Y | ----- <br> WO 99/10783 A (VOYAN TECHNOLOGY [US]) 4 March 1999 (1999-03-04) * page 3, line 26 - line 22; figures 1,4 * ----- | 6,12 | **TECHNICAL FIELDS SEARCHED (IPC)** <br><br> G05B |

The present search report has been drawn up for all claims

| Place of search | Date of completion of the search | Examiner |
|---|---|---|
| Munich | 18 February 2009 | Lalinde, Rafael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 4844

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2009

| Patent document cited in search report | | Publication date | Patent family member(s) | | Publication date |
|---|---|---|---|---|---|
| US 2004059441 | A1 | 25-03-2004 | NONE | | |
| WO 9910783 | A | 04-03-1999 | AU | 9030898 A | 16-03-1999 |
| | | | DE | 69822314 D1 | 15-04-2004 |
| | | | DE | 69822314 T2 | 30-12-2004 |
| | | | EP | 1015943 A1 | 05-07-2000 |
| | | | US | 6285971 B1 | 04-09-2001 |
| | | | US | 5991525 A | 23-11-1999 |

EPO FORM P0459

For more details about this annex : see Official Journal of the European Patent Office, No. 12/82

**EP 2 169 483 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1406136 A